# EUROPEAN PATENT APPLICATION

(11) **EP 4 040 276 A1**
(43) Date of publication of application: **10.08.2022**
(21) Application number: 22152890.4
(22) Date of filing: 24.01.2022
(51) Int. Cl.: G06F 3/041, G06F 3/042, G06F 3/04883, G06F 3/044

(54) **INFORMATION PROCESSING APPARATUS**

(30) Priority: 04.02.2021 JP 2021016527
(71) Applicant: Toshiba TEC Kabushiki Kaisha, Tokyo 141-8562 (JP)
(72) Inventor: Takahashi, Nobuaki, Shinagawa-ku, Tokyo, 141-8562 (JP)
(74) Representative: Hoffmann Eitle

(57) **Abstract**

According to one embodiment, an information processing apparatus includes a touch panel, a receiving unit, and a control unit. The touch panel detects a touch operation. The receiving unit receives an image in a range including the touch panel photographed by a camera. The control unit detects, based on the image, an input motion by a user for a first operation area set on a first screen of the touch panel, and displays a third screen different from a second screen displayed on the touch panel in response to a touch operation for the first operation area on the touch panel, if the touch operation corresponding to the input motion is not detected by the touch panel.

## Description

### CROSS-REFERENCE TO RELATED APPLICATION

This application is based upon and claims the benefit of priority from Japanese Patent Application No. 2021-016527, filed on February 4, 2021, the entire contents of which are incorporated herein by reference.

### FIELD

Embodiments described herein relate generally to an image processing apparatus including a touch panel and an information processing method.

### BACKGROUND

In an information processing apparatus such as a multi function peripheral (MFP) or the like, for example, an electrostatic capacitance type touch panel is used as an operation unit operated by a user. The information processing apparatus displays an operation screen, on which an operation area such as a button or the like is set, on the touch panel, and executes various processes corresponding to the operation area in response to a user's touch operation for the operation area on the touch panel.

The electrostatic capacitance type touch panel has a characteristic that detection sensitivity of the touch operation deteriorates if a fingertip of the user who performs the touch operation on the touch panel dries, for example, due to dry season or due to aging.

If the detection sensitivity of the touch panel deteriorates, the information processing apparatus may not detect the touch operation and may not execute the process corresponding to the operation area even though the user performs the touch operation on the touch panel. Here, the user may repeat the touch operation on the touch panel, or give up the execution of the process by the information processing apparatus.

### SUMMARY OF THE INVENTION

One of the objects of the present invention is to improve prior art techniques and overcome at least some of the prior art problems as for instance above illustrated.

According to a first aspect of the invention, it is provided an information processing apparatus, comprising a touch panel that detects a touch operation; a receiving component configured to receive an image in a range including the touch panel photographed by a camera; and a controller configured to detect, based on the image, an input motion by a user for a first operation area set on a first screen of the touch panel, and display a third screen different from a second screen displayed on the touch panel in response to a touch operation for the first operation area on the touch panel, if the touch operation for the first operation area corresponding to the input motion is not detected by the touch panel.

Optionally, in the information processing apparatus according to the first aspect of the invention, a number of third operation areas which become targets of a touch operation set on the third screen is smaller than a number of second operation areas which become targets of a touch operation set on the second screen.

Optionally, in the information processing apparatus according to the first aspect of the invention, the controller is further configured to divide a plurality of third operation areas respectively corresponding to the plurality of second operation areas set on the second screen into a plurality of third screens which are different from each other and displayed on the touch panel, and display the plurality of third screens in order.

Optionally, in the information processing apparatus according to the first aspect of the invention, a display area of the third operation area set on the third screen is larger than a display area of the second operation area set on the second screen.

Optionally, in the information processing apparatus according to the first aspect of the invention further comprises a printing apparatus, wherein the controller causes the touch panel to display the first screen in which operation areas corresponding to a plurality of different processes including an operation area for instructing execution of a copy process by the printing apparatus are set, and the controller detects an input motion by the user for the operation area corresponding to the copy process based on the image, and causes the touch panel to display the third screen in which an operation area for confirming the execution of the copy process is set if a touch operation corresponding to the input motion is not detected by the touch panel.

Optionally, in the information processing apparatus according to the first aspect of the invention, the touch panel is an electrostatic capacitance touch panel.

Optionally, in the information processing apparatus according to the first aspect of the invention, the receiving component receives a plurality of images from a plurality of cameras.

According to a second aspect of the invention, it is provided an information processing method, comprising that detecting a touch operation on a touch panel; receiving an image in a range including the touch panel photographed by a camera; detecting, based on the image, an input motion by a user for a first operation area set on a first screen of the touch panel; and displaying a third screen different from a second screen displayed on the touch panel in response to a touch operation for the first operation area on the touch panel, if the touch operation for the first operation area corresponding to the input motion is not detected by the touch panel.

Optionally, in the information processing method according to the second aspect of the invention, a number of third operation areas which become targets of a touch operation set on the third screen is smaller than a number of second operation areas which become targets of a touch operation set on the second screen.

Optionally, the information processing method according to the second aspect of the invention further comprises dividing a plurality of third operation areas respectively corresponding to the plurality of second operation areas set on the second screen into a plurality of third screens which are different from each other and displayed on the touch panel; and displaying the plurality of third screens in order.

Optionally, the information processing method according to the second aspect of the invention further comprises causing the touch panel to display the first screen in which operation areas corresponding to a plurality of different processes including an operation area for instructing execution of a copy process by a printing apparatus are set; and detecting an input motion by the user for the operation area corresponding to the copy process based on the image, and causes the touch panel to display the third screen in which an operation area for confirming the execution of the copy process is set if a touch operation corresponding to the input motion is not detected by the touch panel.

Optionally, the information processing method according to the second aspect of the invention further comprises receiving a plurality of images from a plurality of cameras.

According to a third aspect of the invention, it is provided a multi-function peripheral, comprising an image forming component; a touch panel that detects a touch operation; a receiving component configured to receive an image in a range including the touch panel photographed by a camera; and a controller configured to detect, based on the image, an input motion by a user for a first operation area set on a first screen of the touch panel, and display a third screen different from a second screen displayed on the touch panel in response to a touch operation for the first operation area on the touch panel, if the touch operation for the first operation area corresponding to the input motion is not detected by the touch panel.

Optionally, in the multi-function peripheral according to the third aspect of the invention, a number of third operation areas which become targets of a touch operation set on the third screen is smaller than a number of second operation areas which become targets of a touch operation set on the second screen.

Optionally, in the multi-function peripheral according to the third aspect of the invention, the controller is further configured to divide a plurality of third operation areas respectively corresponding to the plurality of second operation areas set on the second screen into a plurality of third screens which are different from each other and displayed on the touch panel, and display the plurality of third screens in order.

Optionally, in the multi-function peripheral according to the third aspect of the invention, a display area of the third operation area set on the third screen is larger than a display area of the second operation area set on the second screen.

Optionally, the multi-function peripheral according to the third aspect of the invention further comprises a printing apparatus, wherein the controller causes the touch panel to display the first screen in which operation areas corresponding to a plurality of different processes including an operation area for instructing execution of a copy process by the printing apparatus are set, and the controller detects an input motion by the user for the operation area corresponding to the copy process based on the image, and causes the touch panel to display the third screen in which an operation area for confirming the execution of the copy process is set if a touch operation corresponding to the input motion is not detected by the touch panel.

Optionally, in the multi-function peripheral according to the third aspect of the invention, the touch panel is an electrostatic capacitance touch panel.

Optionally, in the multi-function peripheral according to the third aspect of the invention, the receiving component receives a plurality of images from a plurality of cameras.

Optionally, in the multi-function peripheral according to the third aspect of the invention, the image forming component comprises at least one of a scanner, a copier, and a facsimile apparatus.

### DESCRIPTION OF THE DRAWINGS

FIG. 1 is a block configuration diagram illustrating an example of a system including an information processing apparatus of an embodiment;
FIG. 2 is a diagram illustrating an example of a camera installation location;
FIG. 3 is a diagram illustrating an example of an installation location;
FIG. 4 is a flowchart illustrating an operation of an input operation process of the information processing apparatus;
FIG. 5 is a flowchart illustrating an operation of a command process for a copy function to be executed in the input operation process;
FIG. 6 is a diagram illustrating an example of an initial operation screen displayed on a touch panel;
FIG. 7 is a diagram illustrating an example of a normal operation screen corresponding to a function designated by a user operation from the initial operation screen;
FIG. 8 is a diagram illustrating an example of an image photographed by a camera installed above the information processing apparatus;
FIG. 9 is a diagram illustrating an example of an image photographed by a camera installed near a touch panel of a housing body of the information processing apparatus;
FIG. 10 is a diagram illustrating an example of a confirmation screen displayed on the touch panel;
FIG. 11 is a diagram illustrating an example of a color mode selection screen corresponding to an item of a color mode;
FIG. 12 is a diagram illustrating an example of a screen for selecting the number of sheets to be printed corresponding to an item of the number of sheets to be printed; and
FIG. 13 is a diagram illustrating an example of a paper size selection screen corresponding to an item of a paper size.

### DETAILED DESCRIPTION

A problem to be solved by embodiments is to provide an information processing apparatus capable of reliably executing a process corresponding to an input operation on a touch panel.

In general, according to one embodiment, an information processing apparatus includes a touch panel, a receiving unit, and a control unit. The touch panel detects a touch operation. The receiving unit receives an image in a range including the touch panel photographed by a camera. The control unit detects, based on the image, an input motion by a user for a first operation area set on a first screen of the touch panel, and displays a third screen different from a second screen displayed on the touch panel in response to a touch operation for the first operation area on the touch panel, if the touch operation corresponding to the input motion is not detected by the touch panel. According to another embodiment, an information processing method involves detecting a touch operation on a touch panel; receiving an image in a range including the touch panel photographed by a camera; detecting, based on the image, an input motion by a user for a first operation area set on a first screen of the touch panel; and displaying a third screen different from a second screen displayed on the touch panel in response to a touch operation for the first operation area on the touch panel, if the touch operation for the first operation area corresponding to the input motion is not detected by the touch panel.

Hereinafter, embodiments will be described with reference to the drawings.

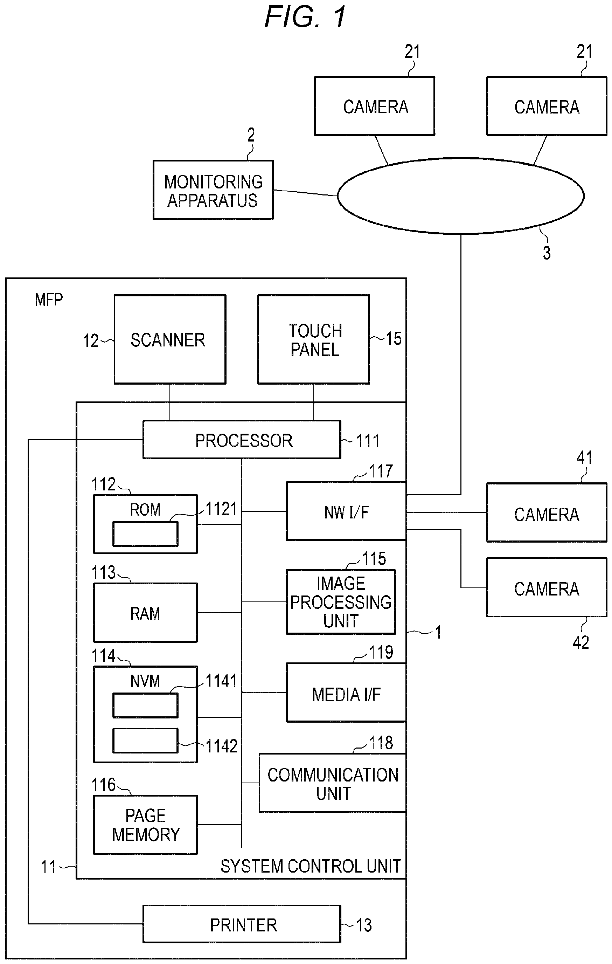

FIG. 1 is a block configuration diagram illustrating an example of a system including an information processing apparatus 1 of the embodiment.

The system illustrated in FIG. 1 includes the information processing apparatus 1 of the embodiment, a monitoring system connected via a network 3 such as a local area network (LAN) or the like, and cameras 41 and 42 externally attached to the information processing apparatus 1.

The information processing apparatus 1 is, for example, an image forming apparatus (multi function peripheral (MFP)). The information processing apparatus 1 has a plurality of functions such as a copy function, a print function, a scan function, a facsimile function, a file BOX function, and a setting function.

The information processing apparatus 1 includes, for example, an electrostatic capacitance type touch panel 15 as an input apparatus for inputting various instructions by a user operation. The information processing apparatus displays an operation screen, on which an operation area such as a button or the like is set, on the touch panel 15, and executes various processes corresponding to the operation area in response to a touch operation by a user for the operation area on the touch panel 15.

Even though detection sensitivity of the touch operation of the touch panel 15 deteriorates, the information processing apparatus 1 provides an auxiliary function for reliably executing a process corresponding to an input operation on the touch panel 15. When not detecting the touch operation by the user on the touch panel 15 by the auxiliary function, the information processing apparatus 1 determines for which operation area an input motion is performed based on an image obtained by photographing the input motion by the user on the touch panel 15. The information processing apparatus 1 displays the operation screen that easily specifies the operation area which is a target of the input motion based on the image, according to the operation area which is the target of the input motion. Accordingly, even in a situation where the detection sensitivity of the touch operation of the touch panel 15 deteriorates, the information processing apparatus 1 can reliably specify the operation area which is the target of the input motion based on the image, and reliably execute the process corresponding to the input operation on the touch panel 15.

The monitoring system includes, for example, a monitoring apparatus 2 and a plurality of cameras 21. The information processing apparatus 1 uses an image photographed by the camera 21 of the monitoring system as the auxiliary function. The camera 21 photographs an image in a range to be monitored and transmits image data to the monitoring apparatus 2 via the network 3. The information processing apparatus 1 is installed in a photographic range of the camera 21. The monitoring apparatus 2 records the image data received from the camera 21 and monitors the photographic range. The monitoring apparatus 2 can transfer the image photographed by the camera 21 to the information processing apparatus 1 via the network 3.

The information processing apparatus 1 receives the data of the image photographed by the camera 21 including the touch panel 15 in the photographic range. If the camera 21 is a network camera (an internet protocol (IP) camera), the information processing apparatus 1 can receive the image data directly from the camera 21 via the network 3 instead of receiving the image data from the monitoring apparatus 2.

As illustrated in FIG. 1, the information processing apparatus 1 includes a system control unit 11, a scanner 12, a printer 13, and the touch panel 15. The system control unit 11 comprehensively controls each unit in the information processing apparatus 1. The system control unit 11 is connected to the scanner 12, the printer 13, and the touch panel 15. For example, the system control unit 11 controls the scanner 12 and the printer 13 in response to an operation instruction input from the touch panel 15.

The scanner 12 scans an image on a document surface and converts the scanned image into image data. For example, the scanner 12 reads the image on the document surface as color image data or monochrome image data by optically scanning the document surface. The scanner 12 includes a scanning mechanism, a photoelectric conversion unit, a document feeding apparatus (auto document feeder (ADF)), or the like.

The printer 13 forms an image on paper which is a recording medium. For example, the printer 13 forms a color image or a monochrome image on paper. As the printer 13, a printer that performs image formation by a printing method such as an electrophotographic method, an inkjet method, or a thermal transfer method or the like can be applied.

For example, the touch panel 15 displays, by control of the system control unit 11, the operation screen on which a user can instruct execution of a process by performing the touch operation. The operation area representing various objects such as a button, a mark, a character, a symbol, an icon, or the like is set on the operation screen.

The system control unit 11 switches, by the auxiliary function, between the operation screen to be displayed if the touch operation by the user on the touch panel 15 is detected, and the operation screen to be displayed if the touch operation is not detected and the input motion by the user is determined based on images photographed by the cameras 21, 41, and 42.

The system control unit 11 can determine the input motion by the user based on the image photographed by any one of the plurality of cameras 21, 41, and 42. The system control unit 11 may determine the input motion by the user based on a plurality of images photographed by the plurality of cameras 21, 41, and 42.

The touch panel 15 displays, for example, an operation screen for selecting any one of a plurality of functions as an initial screen. On an initial operation screen, for example, buttons corresponding to each of the copy function, the print function, the scan function, the facsimile function, the file BOX function, and the setting function are set.

If the touch panel 15 detects a touch operation for selecting any button on the initial operation screen, the system control unit 11 displays a normal operation screen corresponding to the selected function. The system control unit 11 executes a command process according to the function (the copy function, the print function, or the like) selected by the touch operation on the normal operation screen.

On the other hand, on the initial operation screen, if the touch operation for selecting any one of the buttons is not detected by the touch panel 15 and an input motion by the user is detected based on an image photographed by a camera, the system control unit 11 displays an auxiliary operation screen instead of displaying the normal operation screen. The system control unit 11 determines the input motion by the user on the auxiliary operation screen based on the image photographed by the camera, and executes a process corresponding to the input motion by the user.

On the auxiliary operation screen, for example, by dividing a plurality of operation areas set on the normal operation screen into a plurality of auxiliary operation screens, the number of operation areas set in one auxiliary operation screen is set to be smaller than the number of operation areas set on the normal operation screen. Here, the system control unit 11 displays a plurality of auxiliary operation screens on the touch panel 15 in order, and determines the input motion by the user on each auxiliary operation screen based on the image. A display area of the operation area set on the auxiliary operation screen is set to be larger than a display area of the operation area set on the normal operation screen.

Accordingly, it is possible to reliably determine the operation area selected by the user if the input motion by the user on the auxiliary operation screen is determined based on the image.

The system control unit 11 includes a processor 111, a ROM 112, a RAM 113, a non-volatile memory (NVM) 114, an image processing unit 115, a page memory 116, an NW I/F 117, a communication unit 118, and a media I/F 119.

The processor 111 is, for example, a CPU. The processor 111 implements various processing functions by executing a control program stored in the ROM 112 or the NVM 114. The processor 111 executes an input operation process by an input operation processing program 1121 provided in the control program, and provides the auxiliary function for assisting the input operation by the user on the touch panel 15.

The ROM 112 stores the control program, control data, or the like that control the operation of the information processing apparatus 1. The control program includes the input operation processing program 1121 for processing the input operation by the user on the touch panel 15. The input operation processing program 1121 is a program for causing the processor 111 to execute the input operation process.

The RAM 113 is a main memory that functions as a working memory.

The NVM 114 is a rewritable non-volatile storage apparatus such as a solid state drive (SSD), a hard disk drive (HDD), or the like. The NVM 114 stores the control program, the control data, or the like for implementing various processing functions. The NVM 114 stores screen data 1141 and 1142 of the operation screen displayed on the touch panel 15. The screen data 1141 is data for displaying the normal operation screen on the touch panel 15. The screen data 1142 is data for displaying the auxiliary operation screen on the touch panel 15.

The image processing unit 115 processes the image data read by the scanner 12 or the image data received via the network 3. If the input operation process is executed by the processor 111, the image processing unit 115 can execute an input motion detection process for detecting the input motion by the user on the touch panel 15, with respect to the images received from the cameras 21 and 41.

The page memory 116 is a memory including a storage area for loading image data for at least one page. The image data to be printed is transferred from the page memory 116 to the NVM 114, and then collected and stored.

The NW I/F 117 is an interface for performing, via the network 3, data communication with each apparatus connected to the network 3. For example, the NW I/F 117 receives the image data from the monitoring apparatus 2 or the cameras 21 and 41. The communication unit 118 is an interface for performing facsimile communication using a public line network. The media I/F 119 is an interface for connecting an external storage medium such as a memory device, a memory card, or the like.

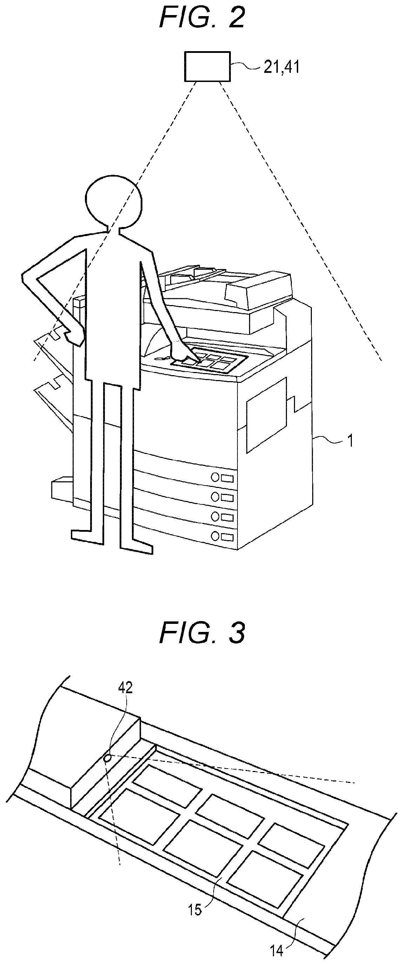

FIG. 2 is a diagram illustrating an example of an installation location of the camera 21. As illustrated in FIG. 2, the camera 21 for monitoring is generally installed upward. Therefore, the camera 21 includes the information processing apparatus 1 installed below in a photographic range. The camera 21 can photograph an image including the touch panel 15 provided on an upper surface of a housing of the information processing apparatus 1. The information processing apparatus 1 receives the image data from the camera 21 that includes the information processing apparatus 1 in the photographic range.

The cameras 41 and 42 are used instead of the camera 21 of the monitoring system. The camera 41 is connected to the information processing apparatus 1 to be able to transmit the data, for example, by wire or wirelessly, and is installed above the information processing apparatus 1 same as that of the camera 21 illustrated in FIG. 2. The camera 42 is installed, for example, in a housing body near the touch panel 15 of the information processing apparatus 1.

FIG. 3 is a diagram illustrating an example of the camera 42 installed in the housing body near the touch panel 15 of the information processing apparatus 1. As illustrated in FIG. 3, the camera 42 is provided, for example, near a side surface of the touch panel 15 at a location higher than the operation screen. The camera 42 includes the operation screen of the touch panel 15, and a fingertip, a pen, or the like of the user who performs the touch operation on the touch panel 15 in the photographic range. The camera 42 can be configured to be optionally mounted on the housing body of the information processing apparatus 1.

The information processing apparatus 1 may receive the image data photographed by at least one camera of the camera 21 of the monitoring system (FIG. 2) and the cameras 41 and 42 (FIGS. 2 and 3). The information processing apparatus 1 may receive the image data photographed by a plurality of cameras having different photographic directions, and may detect the input motion based on a result of the input motion detection process for each image. Here, it is possible to more reliably detect the input motion by the user on the touch panel 15.

Next, an operation of the information processing apparatus 1 of the embodiment will be described. In the following description, a process for displaying the auxiliary operation screen is executed based on the image photographed by the camera 21 or the camera 41 installed above the information processing apparatus 1.

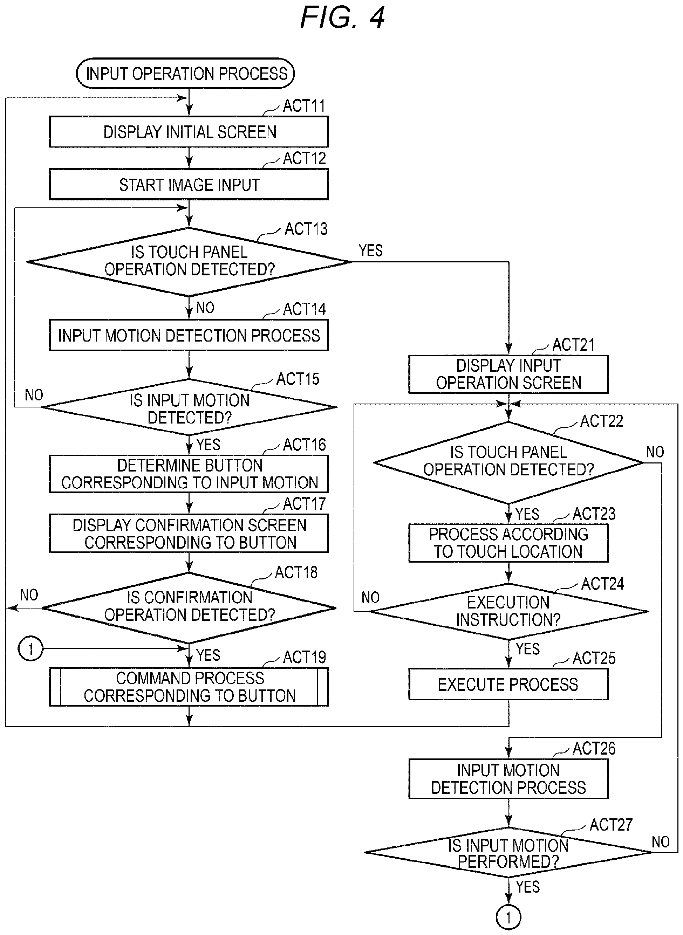

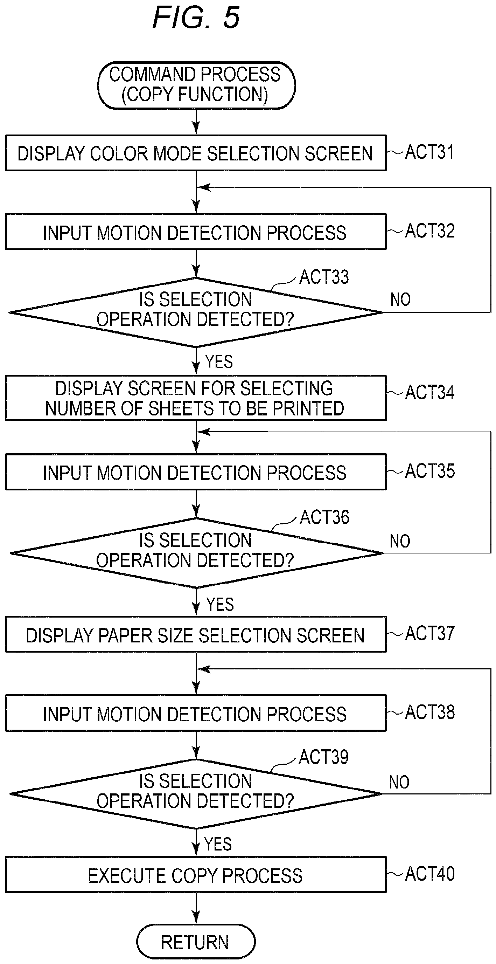

FIG. 4 is a flowchart illustrating an operation of the input operation process of the information processing apparatus 1. FIG. 5 is a flowchart illustrating an operation of the command process for the copy function executed in the input operation process.

When executing the input operation processing program 1121 and starting the input operation process, the processor 111 displays an initial operation screen on the touch panel 15 (ACT 11).

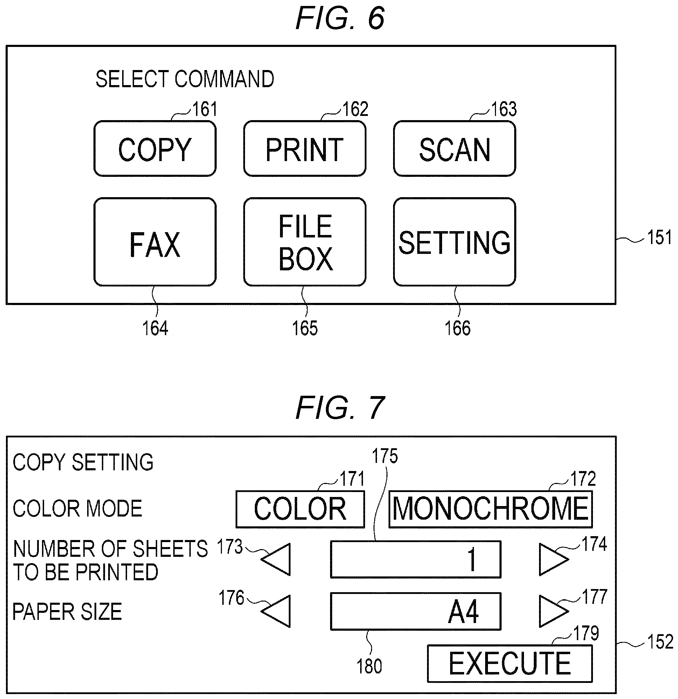

FIG. 6 is a diagram illustrating an example of an initial operation screen 151 displayed on the touch panel 15. As illustrated in FIG. 6, a plurality of buttons corresponding to each of the plurality of functions are set on the operation screen 151. For example, a copy button 161 for selecting the copy function, a print button 162 for selecting the print function, a scan button 163 for selecting the scan function, a FAX button 164 for selecting the facsimile function, a file BOX button 165 for selecting the file BOX function, and a setting button 166 for selecting the setting function are provided on the operation screen 151.

The processor 111 starts an image input from the camera 21 or the camera 4 in a state where an operation on the touch panel 15 can be performed (ACT 12). That is, the processor 111 receives an image including the touch panel 15 in the photographic range from the camera 21 or the camera 4 via the NW I/F 117 in order to detect the input motion by the user on the touch panel 15.

If a touch operation is detected by the touch panel 15 on which the initial operation screen is displayed (ACT 13: YES), the processor 111 determines an operation area designated by the user based on a location where the touch operation is performed. The processor 111 displays a normal operation screen corresponding to a function corresponding to the operation area designated by the user on the touch panel 15 instead of displaying the initial operation screen (ACT 21) .

FIG. 7 is a diagram illustrating an example of the normal operation screen corresponding to the function designated by the user operation from the initial operation screen. FIG. 7 illustrates an example of a normal operation screen 152 of the copy function if the copy button 161 corresponding to the copy function illustrated in FIG. 6 is designated.

The normal operation screen 152 of the copy function illustrated in FIG. 7 includes a plurality of operation areas corresponding to items of copy setting for controlling a copy process, and an operation area for receiving an instruction to execute the copy process . In the copy setting, for example, a plurality of items such as a color mode, the number of sheets to be printed, a paper size, or the like are provided.

For example, items of the color mode include a color button 171 for selecting a color as a print color and a monochrome button 172 for selecting monochrome. Items of the number of sheets to be printed include an increase button 173 for increasing the number of sheets to be printed, a decrease button 174 for reducing the number of sheets to be printed, and a setting area 175 for displaying a number (an initial value is 1) indicating the number of sheets to be printed. Items of the paper size include change buttons 176 and 177 for instructing a change of the paper size, and a setting area 180 for displaying the paper size designated by an operation of the change buttons 176 and 177.

The normal operation screen 152 includes an execution button 179 for receiving an instruction to execute the copy process.

When detecting the touch operation on the touch panel 15 on which the normal operation screen 152 is displayed (ACT 22: YES), the processor 111 executes a process corresponding to a location where the touch operation is performed (ACT 23) . If the location where the touch operation is performed is not the execution button 179 (ACT 24: NO), the processor 111 executes a copy setting process in response to detection of the touch operation on the normal operation screen 152 (ACT 23) .

For example, if the touch operation is performed on the color button 171 or the monochrome button 172, the processor 111 changes the color button 171 or the monochrome button 172 selected by the touch operation into a display form indicating that the button is selected.

If the touch operation is performed on the increase button 173 of the items of the number of sheets to be printed, the processor 111 adds 1 (+1) to a number indicating the current number of sheets to be printed displayed in the setting area 175, and updates the number displayed in the setting area 175. If the touch operation is performed on the decrease button 174 of the items of the number of sheets to be printed, the processor 111 subtracts 1 (-1) from the number indicating the current number of sheets to be printed displayed in the setting area 175, and updates the number displayed in the setting area 175.

If the touch operation is performed on the change buttons 176 and 177, the processor 111 changes the current paper size displayed in the setting area 180 in a predetermined order. For example, the paper size is set in ascending order of "B5", "A4", "B4", and "A3", the paper size is changed to a smaller paper size in response to the touch operation on the change button 176, and the paper size is changed to a larger size in response to the touch operation on the change button 177.

The processor 111 allows the RAM 113 to store a content set by the touch operation on the normal operation screen 152, and refers to the content in order to control the printer 13 when executing the copy process. If the touch operation is not performed on the normal operation screen 152, the processor 111 causes the RAM 113 to store a preset default value for each item.

If the touch operation is performed on the execution button 179 after the item of the copy setting is set on the normal operation screen 152, such that the execution of the copy process is instructed (ACT 24: YES), the processor 111 controls the scanner 12 and the printer 13 according to a content of the copy setting to execute the copy function (ACT 25) .

If the button (the print button 162, the scan button 163, the FAX button 164, the file BOX button 165, and the setting button 166) corresponding to another function other than the copy function is selected by the touch operation on the touch panel 15 on the initial operation screen 151, the processor 111 executes the process of each function after performing various settings according to each function same as that of the above-described copy function.

On the other hand, if the touch panel 15 does not detect the touch operation (ACT 13: NO), the processor 111 executes an input motion detection process with respect to the image received via the NW I/F 117 (ACT 14). That is, the processor 111 executes a process for detecting the input motion by the user on the touch panel 15 from the images photographed by the cameras 21, 41 or the camera 42.

Here, the process for detecting the input motion by the user on the touch panel 15, based on the images photographed by the cameras 21 and 41 installed above the information processing apparatus 1, will be described.

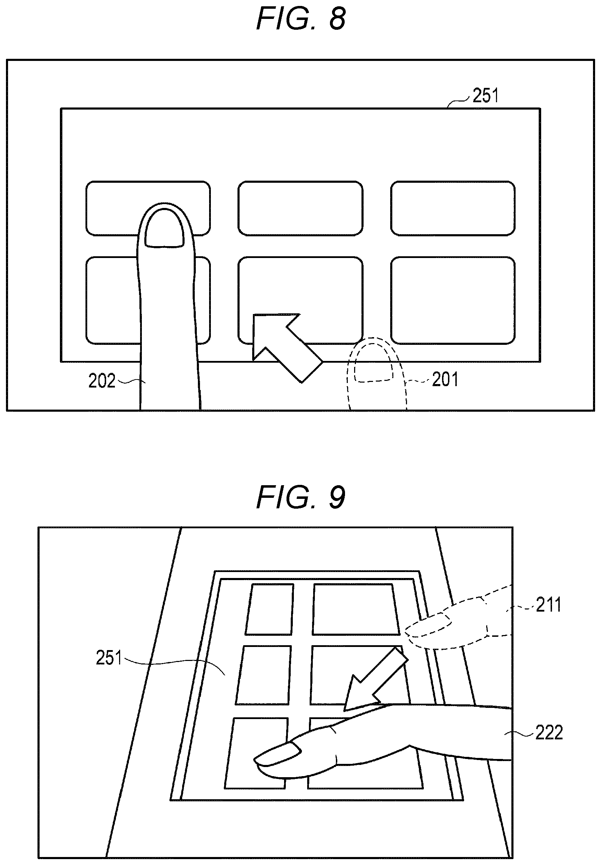

As illustrated in FIG. 2, FIG. 8 is a diagram illustrating an example of the images photographed by the cameras 21 and 41 installed above the information processing apparatus 1. In the case of the cameras 21 and 41 installed above the information processing apparatus 1, a wide range is targeted for photographing. Therefore, the processor 111 cuts out a target image in a range including a periphery of an area 251 corresponding to the touch panel 15, which is a target of a process for detecting the input motion, from the images photographed by the cameras 21 and 41. The processor 111 detects an object of which location changes due to the touch operation in the target image. For example, the processor 111 detects an object corresponding to a user's finger or pen by using a known image processing technology.

The processor 111 detects the object corresponding to the user's finger or the like from each image every time the images photographed by the cameras 21 and 41 are received with the lapse of time. FIG. 8 illustrates an example in which objects 201 and 202 corresponding to the user's finger are detected.

If the object is detected from the image, the processor 111 determines a change in location of the object with the lapse of time. FIG. 8 illustrates an example in which the object 201 is detected from the target image and then the object 202 is detected from a target image of an image photographed thereafter.

If the object detected from the image moves, for example, from the outside of the area 251 corresponding to the touch panel 15 to the operation area (the button or the like) set on the operation screen of the touch panel 15, stops at a location of the operation area, and then leaves the operation area, the processor 111 determines that the user performs the input motion for the operation area at the location where the object is stopped.

When detecting the input motion by the user on the touch panel 15 based on the image photographed by the camera 42 installed near the touch panel 15 of the housing body of the information processing apparatus 1, a process is performed on the image as follows.

As illustrated in FIG. 3, FIG. 9 is a diagram illustrating an example of an image photographed by the camera 42 installed near the touch panel 15 of the housing body of the information processing apparatus 1. FIG. 9 illustrates an example in which an object 211 is detected from the target image and then an object 222 is detected from a target image of an image photographed thereafter. The input motion by the user for the operation area can also be basically detected from the image photographed by the camera 42, same as that of the process for the images photographed by the cameras 21 and 41 described above.

In the case of the image photographed by the camera 42 installed near the touch panel 15, since the touch panel 15 is photographed in a wide range of the image, it is not required to cut out the target image for detecting the input motion. Since the touch operation by the user that changes in a vertical direction (up and down movement of the fingertip) is photographed from a horizontal direction, it is easy to determine the input motion for the operation area set on the operation screen. If a surface of the touch panel 15 changes (a change in display color at a touch location, a dent at the touch location, or the like) due to the touch operation on the touch panel 15, an operation area at a location where the surface changes is detected, thereby making it possible to specify the operation area which is the target of the input motion.

Erroneous detection may occur in the detection of one input motion. For example, the user may move their fingertip close to the touch panel 15, but may not touch the touch panel 15. Therefore, for example, if the input motion is detected a plurality of times within a predetermined time (for example, within 3 seconds), the processor 111 proceeds to a process for displaying the auxiliary operation screen.

Here, the processor 111 may proceed to a process for displaying the auxiliary operation screen in response to the detection of one input motion of the touch operation on the touch panel 15.

Not only when the input motion is detected a plurality of times, but also when an input motion that continuously performs the touch operation for one operation area for a predetermined time or longer is detected (when one operation area is long pressed), the processor 111 may proceed to the process for displaying the auxiliary operation screen.

If the touch operation is not detected by the touch panel 15 (ACT 13: NO) and the input motion by the user is not detected from the images photographed by the cameras 21 and 41 (ACT 15: NO), the processor 111 continuously executes the input motion detection process (ACT 14).

On the other hand, if the touch operation is not detected by the touch panel 15 (ACT 13: NO) and the input motion by the user is detected from the images photographed by the cameras 21 and 41 (ACT 15: YES), the processor 111 determines an operation area which is a target of the input motion. For example, if a plurality of input motions are detected within a predetermined time, the processor 111 determines an operation area which is a target of a first detected input motion as an operation area which is a target of the touch motion by the user. The processor 111 causes the RAM 113 to store data indicating the operation area determined as the target of the input motion.

For example, if the user performs a touch operation on a button provided on the operation screen of the touch panel 15, and a process corresponding to the touch operation does not start, the user may repeat the touch operation at a different location on the touch panel 15 to confirm whether the touch panel 15 responds to the touch operation by the user. Here as well, the operation area for which the touch operation is first performed is specified as the operation area which is the target of the touch operation by the user.

If the input motion, in which the operation area is long pressed, is detected, the processor 111 specifies the operation area, which is determined as a long pressed target, as the operation area which is the target of the touch operation by the user.

The processor 111 displays the auxiliary operation screen corresponding to the operation area which is the target of the input motion by the user on the touch panel 15 (ACT 17) . The processor 111 displays, as the auxiliary operation screen to be displayed first, a confirmation screen 153 for confirming whether a function of the operation area determined as the target of the input motion from the initial operation screen 151 is a function intended to be selected by the touch operation of the user.

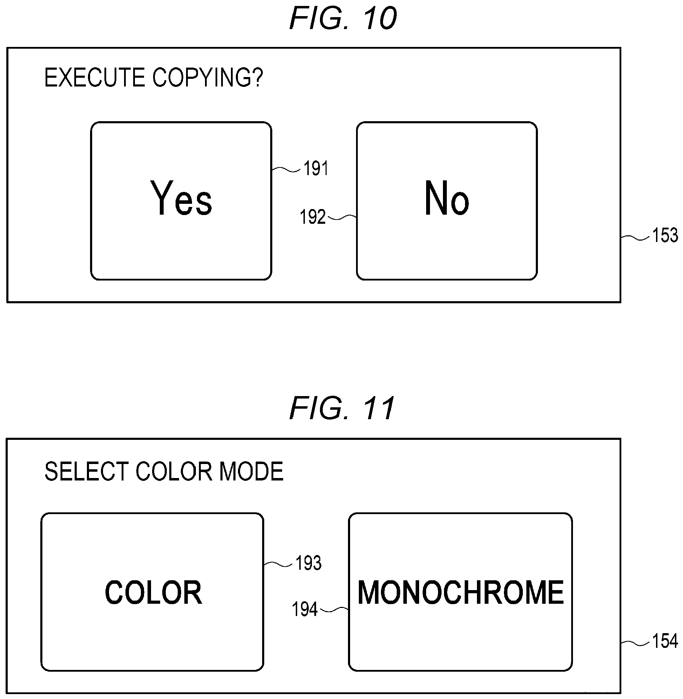

FIG. 10 is a diagram illustrating an example of the confirmation screen 153 displayed on the touch panel 15. FIG. 10 illustrates an example of the confirmation screen 153 if the copy button 161 corresponding to the copy function is selected by the user on the initial operation screen 151 illustrated in FIG. 6.

For example, a Yes button 191 and a No button 192 are displayed together with a guide message "Do you want to copy?" on the confirmation screen 153 illustrated in FIG. 10. The Yes button 191 and the No button 192 are buttons for causing the user to input whether the touch operation of the user on the copy button 161 of the initial operation screen 151 is correctly detected by the input motion detection process based on the image.

As illustrated in FIG. 10, only two buttons 191 and 192 are set on the confirmation screen 153, such that a size of one button is increased. For example, an area of the operation area provided on the confirmation screen 153 is larger than that of one operation area set on the normal operation screen 152 illustrated in FIG. 7. A distance between the two buttons is wider than a distance between the operation areas of the operation screen 151.

Accordingly, it becomes easy to determine, based on the images photographed by the cameras 21 and 41, which of the operation areas set on the operation screen of the touch panel 15 is touched by the user to perform the input motion.

When detecting, based on the images photographed by the cameras 21 and 41, the input motion for the operation area of the No button 192 on the confirmation screen 153 (ACT 18: NO), the processor 111 returns to the initial state. That is, the processor 111 displays the initial operation screen 151 on the touch panel 15 instead of displaying the confirmation screen 153 (ACT 11).

On the other hand, when detecting, based on the images photographed by the cameras 21 and 41, the input motion for the operation area of the Yes button 191 on the confirmation screen 153 (ACT 18: YES), the processor 111 executes a command process corresponding to an operation area which is a target of the input motion on the initial operation screen 151 (ACT 19). Here, the processor 111 executes the command process of the copy function.

Referring to the flowchart illustrated in FIG. 5, the command process will be described by taking the copy function as an example.

In the command process of the copy function, the processor 111 displays a plurality of auxiliary operation screens corresponding to each of the plurality of items of the copy setting in order, and detects the input motion on each auxiliary operation screen based on the images photographed by the cameras 21 and 41.

For example, with respect to the copy function, a plurality of auxiliary operation screens are generated corresponding to each of the color mode, the number of sheets to be printed, the paper size, or the like of a plurality of items set on the normal operation screen 152 illustrated in FIG. 7. For example, the plurality of auxiliary operation screens are stored in the NVM 114 as the screen data 1142.

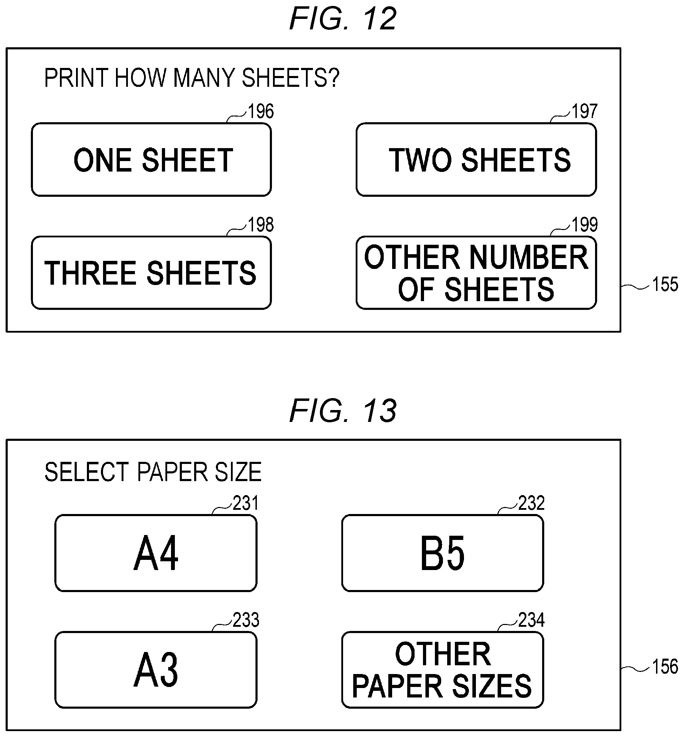

FIG. 11 is a diagram illustrating an example in which a color mode selection screen 154 corresponding to the item of the color mode is displayed. FIG. 12 is a diagram illustrating an example in which a screen for selecting the number of sheets to be printed 155 corresponding to the item of the number of sheets to be printed is displayed. FIG. 13 is a diagram illustrating an example in which a paper size selection screen 156 corresponding to the item of the paper size is displayed.

As illustrated in FIG. 11, the color mode selection screen 154 includes a color button 193 for selecting a color as a print color, which is used only for setting the item of the color mode, and a monochrome button 194 for selecting monochrome. Same as that of the confirmation screen 153, the color mode selection screen 154 has a smaller number of operation areas than the normal operation screen 152 illustrated in FIG. 7, and has a large area of one operation area. A distance between the color button 193 and the monochrome button 194 is set to be wider than the distance between the operation areas of the operation screen 151.

As illustrated in FIG. 12, the screen for selecting the number of sheets to be printed 155 includes a button 196 for one sheet, a button 197 for two sheets, a button 198 for three sheets, and a button 199 for other number of sheets for selecting the number of sheets to be printed, which are used only for the item of the number of sheets to be printed. In the screen for selecting the number of sheets to be printed 155, only the buttons 196, 197, and 198 corresponding to the number of sheets to be printed frequently selected by the user are provided, such that the number of buttons is reduced and an area of one operation area is larger than those of the increase button 173 and the decrease button 174 of the operation screen 151. By providing the button 199 for other number of sheets, the number of four sheets or more to be printed can be selected in the same manner.

As illustrated in FIG. 13, the paper size selection screen 156 includes a button 231 for A4, a button 232 for B5, a button 233 for A3, and a button 234 for other paper sizes for selecting the paper size, which are used only for the item of the paper size. In the paper size selection screen 156, only the buttons 231, 232, and 233 corresponding to the paper size frequently selected by the user are provided, such that the number of buttons is reduced and an area of one operation area is larger than those of the change buttons 176 and 177 of the operation screen 151. By providing the button 234 for other paper sizes, other paper sizes can be selected in the same manner.

Accordingly, as illustrated in FIGS. 11 to 13, in the color mode selection screen 154, the screen for selecting the number of sheets to be printed 155, and the paper size selection screen 156, the number of buttons provided on one screen is reduced, such that a size of one button is increased, and a distance between the buttons is widened. Accordingly, in a situation where the touch operation is not detected on the touch panel 15, it becomes easy to determine, based on the image photographed by the camera 41, which of the operation areas set on the auxiliary operation screen of the touch panel 15 is touched by the user to perform the input motion.

First, the processor 111 displays the color mode selection screen 154 on the touch panel 15 (ACT 31). The processor 111 executes the input motion detection process (ACT 32) in the same manner as described above, and detects the input motion by the user on the color mode selection screen 154 based on the images photographed by the cameras 21 and 41.

When not detecting the operation of selecting either the color button 193 or the monochrome button 194 set on the color mode selection screen 154 (ACT 33: NO), the processor 111 continuously executes the input motion detection process (ACT 32) .

On the other hand, if the operation of selecting either the color button 193 or the monochrome button 194 is detected by the input motion detection process (ACT 33: YES), the processor 111 causes the RAM 113 to store data indicating a setting content (color or monochrome) of the color mode corresponding to the selected button.

When storing the setting content corresponding to the input motion on the color mode selection screen 154, the processor 111 displays the screen for selecting the number of sheets to be printed 155, which is the next auxiliary operation screen, on the touch panel 15 (ACT 34). The processor 111 executes the input motion detection process (ACT 35) in the same manner as described above, and detects the input motion by the user on the screen for selecting the number of sheets to be printed 155 based on the images photographed by the cameras 21 and 41.

When not detecting the operation of selecting any one of the plurality of buttons 196 to 199 set on the screen for selecting the number of sheets to be printed 155 (ACT 36: NO), the processor 111 continuously executes the input motion detection process (ACT 35).

On the other hand, when detecting the operation of selecting one of the button 196 for one sheet, the button 197 for two sheets, and the button 198 for three sheets set on the screen for selecting the number of sheets to be printed 155 by the input motion detection process (ACT 36: YES), the processor 111 causes the RAM 113 to store data indicating a setting content (number of sheets to be printed) corresponding to the selected button.

When detecting that the button 199 for other number of sheets set on the screen for selecting the number of sheets to be printed 155 is selected, the processor 111 displays a screen for selecting the number of sheets to be printed for selecting four or more sheets, and executes the input motion detection process in the same manner.

The processor 111 causes the RAM 113 to store data indicating a setting content of the number of sheets to be printed corresponding to the operation area selected on the screen for selecting the number of sheets to be printed 155.

When determining the input motion on the screen for selecting the number of sheets to be printed 155 and storing the setting content corresponding to the input motion, the processor 111 displays the paper size selection screen 156, which is the next auxiliary operation screen, on the touch panel 15 (ACT 37). The processor 111 executes the input motion detection process (ACT 38) in the same manner as described above, and detects the input motion by the user on the paper size selection screen 156 based on the images photographed by the cameras 21 and 41.

When not detecting the operation of selecting any one of the plurality of buttons 231 to 233 set on the paper size selection screen 156 (ACT 39: NO), the processor 111 continuously executes the input motion detection process (ACT 38) .

On the other hand, when detecting the operation of selecting any one of the button 231 for A4, the button 232 for B5, and the button 233 for A3 set on the paper size selection screen 156 (ACT 39: YES), the processor 111 causes the RAM 113 to store data indicating a setting content (a paper size) corresponding to the selected button.

When detecting that the button 234 for other paper sizes set on the paper size selection screen 156 is selected, the processor 111 displays a paper size selection screen for selecting a paper size other than A4, B5, and A3, and executes the input motion detection process in the same manner.

The processor 111 causes the RAM 113 to store data indicating a setting content of the paper size corresponding to the operation area selected on the paper size selection screen 156.

When determining the input motion on the paper size selection screen 156 and storing the setting content corresponding to the input motion (ACT 39: YES), the processor 111 executes the copy process because the settings for all the items of the copy setting are completed (ACT 40). That is, the processor 111 controls the scanner 12 and the printer 13 according to contents of the copy setting set on the plurality of auxiliary operation screens, and executes the copy process.

In the above description, if all the items of the copy setting are completely set, the copy process is executed, and the execution of the copy process may be able to be instructed from the auxiliary operation screen. That is, an execution button for receiving an instruction to execute the copy process is provided on each of the auxiliary operation screens of the color mode selection screen 154, the screen for selecting the number of sheets to be printed 155, and the paper size selection screen 156. When detecting the input motion by the user for the execution button while displaying any one of the auxiliary screens, the processor 111 controls the scanner 12 and the printer 13 according to the setting content (or a default value) of the copy setting so far, and executes the copy process.

As such, by dividing a plurality of items in the copy setting into a plurality of auxiliary operation screens, the number of operation areas set on one auxiliary operation screen can be smaller than the number of operation areas set on the normal operation screen, and the area of the operation area can be increased. Therefore, it is possible to easily detect the input motion by the user on the touch panel 15 based on the images photographed by the cameras 21 and 41. Therefore, it is possible to reliably execute the process corresponding to the input operation on the touch panel 15.

In the case of the command process as well, such as the print function, the scan function, or the like other than the copy process, same as that of the copy function described above, the processor 111 stores the setting contents of the plurality of setting items by detecting the input motions by the user on the plurality of auxiliary operation screens, and executes the process.

When displaying the normal operation screen on the touch panel 15 (ACT 21) and not detecting the touch operation by the touch panel 15 while the user performs the setting operation (ACT 22: YES, ACT 23), as described above, the processor 111 enables the setting using the auxiliary operation screen.

That is, the processor 111 executes the input motion detection process (ACT 26) after displaying the normal operation screen on the touch panel 15 (ACT 21). When not detecting the touch operation by the touch panel 15 (ACT 22: NO) and detecting the input motion by the user by the input motion detection process (ACT 27: YES), the processor 111 proceeds to the command process using the auxiliary operation screen. Here, since the setting operation using the normal operation screen corresponding to any function (for example, the copy function) is being performed, the processor 111 proceeds to the command process of a function targeted for a current setting operation (ACT 19).

The processor 111 displays a plurality of auxiliary operation screens corresponding to each of the plurality of items in order in the same manner as described above (FIG. 5), and detects the input motion on each auxiliary operation screen based on the image.

As such, if the touch operation is not detected on the touch panel 15 while the input operation is performed by using the normal operation screen, the process proceeds to the input operation process using the auxiliary operation screen. Therefore, it is possible to continuously execute the input operation by the user and to reliably execute the process corresponding to the input operation on the touch panel 15.

In the above description, if the touch operation is not detected by the touch panel 15, the auxiliary operation screen is displayed with the number of operation areas smaller than the number of operation areas on the normal operation screen, and another form of operation screen can be used. For example, among a plurality of operation areas on the normal operation screen, a size of the operation area to be selected is increased, and a size of the rest of operation areas is reduced. As a result, even though the number of operation areas set on the operation screen is the same, it is possible to easily detect the input motion by the user for a specific operation area to be selected.

In the above description, MFP is described as the information processing apparatus 1, and another apparatus including the touch panel 15 as an input apparatus may be used. For example, the information processing apparatus 1 may be an automated teller machine (ATM), a point of sales (POS) terminal, a car navigation system, a ticket vending machine, or the like.

In the above description, the information processing apparatus 1 including the electrostatic capacitance type touch panel 15 is used, and for example, the information processing apparatus 1 including a touch panel of another type such as a resistance film type, an infrared type, or the like may be used.

While certain embodiments have been described, the embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions.

## Claims

1. An information processing apparatus, comprising:
a touch panel that detects a touch operation;
a receiving component configured to receive an image in a range including the touch panel photographed by a camera; and
a controller configured to
detect, based on the image, an input motion by a user for a first operation area set on a first screen of the touch panel, and
display a third screen different from a second screen displayed on the touch panel in response to a touch operation for the first operation area on the touch panel, if the touch operation for the first operation area corresponding to the input motion is not detected by the touch panel.

2. The information processing apparatus according to claim 1, wherein
a number of third operation areas which become targets of a touch operation set on the third screen is smaller than a number of second operation areas which become targets of a touch operation set on the second screen.

3. The information processing apparatus according to claim 2, wherein
the controller is further configured to
divide a plurality of third operation areas respectively corresponding to the plurality of second operation areas set on the second screen into a plurality of third screens which are different from each other and displayed on the touch panel, and
display the plurality of third screens in order.

4. The information processing apparatus according to claim 2 or 3, wherein
a display area of the third operation area set on the third screen is larger than a display area of the second operation area set on the second screen.

5. The information processing apparatus according to any of claims 1 to 4, further comprising:
a printing apparatus, wherein
the controller causes the touch panel to display the first screen in which operation areas corresponding to a plurality of different processes including an operation area for instructing execution of a copy process by the printing apparatus are set, and
the controller detects an input motion by the user for the operation area corresponding to the copy process based on the image, and causes the touch panel to display the third screen in which an operation area for confirming the execution of the copy process is set if a touch operation corresponding to the input motion is not detected by the touch panel.

6. The information processing apparatus according to any of claims 1 to 5, wherein
the touch panel is an electrostatic capacitance touch panel.

7. The information processing apparatus according to any of claims 1 to 6, wherein
the receiving component receives a plurality of images from a plurality of cameras.

8. An information processing method, comprising:
that detecting a touch operation on a touch panel;
receiving an image in a range including the touch panel photographed by a camera;
detecting, based on the image, an input motion by a user for a first operation area set on a first screen of the touch panel; and
displaying a third screen different from a second screen displayed on the touch panel in response to a touch operation for the first operation area on the touch panel, if the touch operation for the first operation area corresponding to the input motion is not detected by the touch panel.

9. The information processing method according to claim 8, wherein
a number of third operation areas which become targets of a touch operation set on the third screen is smaller than a number of second operation areas which become targets of a touch operation set on the second screen.

10. The information processing method according to claim 9, further comprising:
dividing a plurality of third operation areas respectively corresponding to the plurality of second operation areas set on the second screen into a plurality of third screens which are different from each other and displayed on the touch panel; and
displaying the plurality of third screens in order.

11. The information processing method according to any of claims 8 to 10, further comprising:
causing the touch panel to display the first screen in which operation areas corresponding to a plurality of different processes including an operation area for instructing execution of a copy process by a printing apparatus are set; and
detecting an input motion by the user for the operation area corresponding to the copy process based on the image, and causes the touch panel to display the third screen in which an operation area for confirming the execution of the copy process is set if a touch operation corresponding to the input motion is not detected by the touch panel.

12. The information processing method according to any of claims 8 to 11, further comprising:
receiving a plurality of images from a plurality of cameras.

13. A multi-function peripheral, comprising:
an image forming component;
an information processing apparatus according to any of claims 1 to 7.

14. The multi-function peripheral according to claim 13, wherein
the image forming component comprises at least one of a scanner, a copier, and a facsimile apparatus.
